# EUROPÄISCHE PATENTSCHRIFT

(11) **EP 0 905 534 B1**
(45) Veröffentlichungstag und Bekanntmachung des Hinweises auf die Patenterteilung: **05.11.2003**
(21) Anmeldenummer: 98116640.8
(22) Anmeldetag: 03.09.1998
(51) Int. Cl.: G02B 6/38

(54) **Verfahren zum Befestigen eines Lichtleitfaserendes aus Glas in einer Glashülse**
Method of fixing end of a glass optical fibre in a glass ferrule
Procédé de fixation de l'extrémité d'une fibre optique en verre dans un embout de connexion en verre

(30) Priorität: 12.09.1997 EP 97115903
(43) Veröffentlichungstag der Anmeldung: 31.03.1999
(73) Patentinhaber: THE WHITAKER CORPORATION, Wilmington, Delaware 19808 (US)
(72) Erfinder: Vergeest, Henricus Jozef, 5213 XH 's-Hertogenbosch (NL)
(74) Vertreter: Heinz-Schäfer, Marion

(56) Entgegenhaltungen:
- EP-A- 0 678 486
- PATENT ABSTRACTS OF JAPAN vol. 008, no. 097 (P-272), 8. Mai 1984 (1984-05-08) & JP 59 010918 A (NIPPON DENSHIN DENWA KOSHA), 20. Januar 1984 (1984-01-20)
- PATENT ABSTRACTS OF JAPAN vol. 008, no. 165 (P-291), 31. Juli 1984 (1984-07-31) & JP 59 062812 A (NIPPON DENSHIN DENWA KOSHA), 10. April 1984 (1984-04-10)
- PATENT ABSTRACTS OF JAPAN vol. 012, no. 460 (P-795), 5. Dezember 1988 (1988-12-05) & JP 63 183407 A (FUJITSU LTD), 28. Juli 1988 (1988-07-28)

## Beschreibung

Die Erfindung betrifft ein Verfahren zum Befestigen eines Leitleitfaserendes aus Glas in einer Glashülse, wobei das Lichtleitfaserende bis zu einer definierten Lage in die Glashülse eingeschoben wird.

Aus der US 5,421,928 ist es bekannt, ein Lichtleitfaserende in einer Hülse (Ferrule) zu fixieren, derart, dass das Ende über die Stirnfläche der Hülse herausragt, das Ende dann mittels eines Lasers abzuschneiden und danach die Stirnfläche von Hülse und Lichtleitfaser mechanisch zu polieren.

Aus der JP 58-108508 A ist es bekannt ein Faserende in einer Hülse zu fixieren, indem beides gegen eine Endfläche geschoben wird. Die Faser wird dann vorläufig zu der Hülse fixiert. Das Faserende wird erhitzt und dadurch gereinigt und geglättet, wonach dann die Faser mit der Hülse verklebt wird.

Aus der JP 59-010918 A ist ein Verfahren zum Verbinden einer Glashülse mit einer Glasfaser bekannt, bei dem zunächst in einem ersten Schritt die Glashülse an einem Ende aufgeheizt wird, bis sie um dieses Ende geschmolzen ist. Dann wird die Faser in die Glashülse eingebracht und in einem zweiten Schritt werden beide Endflächen aufgeheizt und geschmolzen und die Aussenseite der Faser mit der Innenseite der Hülse verschmolzen.

Aus der US 4,510,005 ist es bekannt ein Faserende in eine Hülse einzubringen und gegen eine hochpolierte Oberfläche zu drücken. Durch Erhitzen dieser Oberfläche wird die Oberfläche des Faserendes angeschmolzen und passt sich der hochpolierten Oberfläche an. Es ist möglich gleichzeitig mit dem Erhitzen einen Klebstoff zwischen der Faser und der Hülse zu aktivieren und die Faser somit gleichzeitig in der Hülse zu verkleben.

Ausgehend von diesem Stand der Technik ist es Aufgabe der Erfindung, ein Verfahren zum Befestigen eines Lichtleitfaserendes aus Glas in einer Glashülse anzugeben, das besonders einfach und zuverlässig durchgeführt werden kann. Die Aufgabe wird gelöst durch ein Verfahren mit den Merkmalen des Patentanspruches 1. Vorteilhafte Weiterbildungen sind in der Unteransprüchen angegeben.

Es ist besonders einfach und kostengünstig ein Lichtleitfaserende aus Glas mit einer Glashülse mittels eines Wärmebehandlungsverfahrens mit einem Lasers zu verschmelzen, wobei die Energieverteilung über die Endfläche derart ist, dass das Energiemaximum im Bereich der Übergangsfläche zwischen Glashülse und Faserende aufgebracht wird. Dazu werden z.B. entsprechende Optiken eingesetzt, die garantieren, das die maximale Intensität des Laserstrahls auf einen Ring verteilt wird und dadurch der äussere Bereich des Mantels der Lichtleitfaser und der innere Bereich der Glashülse geschmolzen und dadurch miteinander verbunden wird.

Es ist besonders wichtig, dass die maximale Intensität nicht im Mittelpunkt des Lichtleitfaserendes aufgebracht wird, da ansonsten eine Deformation des Kerns möglich wäre.

Das erfindungsgemäss vorgeschlagene Verfahren ist auch besonders vorteilhaft, da eine geschnittene oder gebrochene Lichtleitfaser eingesetzt werden kann. Es ist nicht notwendig die Lichtleitfaser schon vor dem Befestigen in der Glashülse, beispielsweise durch mechanisches Polieren zu bearbeiten. Das Schneiden des Lichtleitfaserendes kann entweder mit mechanischen Mitteln oder mittels eines Lasers erfolgen.

Weiter ist es sinnvoll, dass beim Einsatz eines Lasers zum Verschmelzen der Glashülse mit dem Lichtleitfaserende, derselbe Laser ebenfalls eingesetzt werden kann, um die Oberfläche des Lichtleitfaserendes nach dem Verschmelzen zu Polieren.

Es können entweder optische Mittel, wie beispielweise ein Hologramm oder ein optisches Linsensystem eingesetz werden, um die maximale Intensität des Lasers auf einen Ring zu verteilen, es ist aber auch möglich dies durch ein entsprechendes System zu erreichen, das den Laserstrahl über die Stirnfläche von Glashülse und Lichtleitfaserende bewegt.

Beim Einbringen des Lichtleitfaserendes in die Glashülse ist eine definierte Lage des Lichtleitfaserendes in der Glashülse vorgesehen. Diese definierte Lage kann entweder derart aussehen, dass a) die Stirnfläche des Lichtleitfaserendes in der Stirnfläche der Glashülse liegt, was besonders sinnvoll ist, wenn ein Verschmelzen bei einer relativ niedrigen Leistung angestrebt ist; oder dass b) die Stirnfläche der Lichtleitfaser über die Stirnfläche der Glashülse hinaus steht, wird nun beim Erhitzen ein Verdampfen von Glaspartikeln am Lichtleitfaserende erzeugt, so ist es möglich, das Verschmelzen derart vorzunehmen, dass nach dem Verschmelzen die Stirnflächen von Lichtleitfaserende und Glashülse in einer Ebene liegen; oder dass c) die Stirnfläche des Lichtleitfaserendes hinter der Stirnfläche der Glashülse liegt, was wiederum dadurch ausgeglichen werden kann, dass Partikel der Glashülse beim Schmelzprozess verdampft werden. Welche Ausführung bevorzugt wird, hängt wesentlich davon ab, wo das Intensitäts-maximum des Laserstrahls angesiedelt ist.

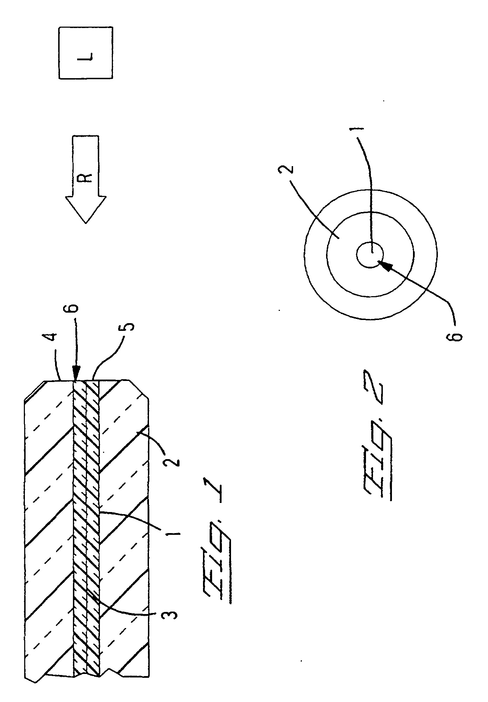

Ein Ausführungsbeispiel der Erfindung soll nun an Hand der Zeichnungen erläutert werden. Figur 1 zeigt einen Querschnitt durch ein Lichtleitfaserende in einer Glashülse und Figur 2 eine Aufsicht auf die Stirnfläche der Glashülse mit eingebrachtem Lichtleitfaserende.

Figur 1 zeigt einen Querschnitt durch ein Lichtleitfaserende 1, das aus Glas hergestellt ist, und durch eine Glashülse 2. Die Glashülse 2 weist eine konzentrische Bohrung auf, in der sich das Lichtleitfaserende befindet. Ebenfalls angedeutet ist der Kern 3 der Lichtleitfaser, ein Laser L, sowie die Richtung R aus der Licht auf die Stirnfläche 4 der Glashülse 2 und die Stirnfläche 5 des Lichtleitfaserendes 1 fallen soll. In Figur 1 ist der Zustand dargestellt, dass die Stirnfläche 5 der Lichtleitfaser 1 und die Stirnfläche 4 der Glashülse übereinstimmen. Das Laserlicht wird nun derart eingebracht, dass in einem Bereich 6, der aus der Figur 2 zu entnehemen ist, die höchste Intensität des Lichts aufgebracht wird. Dies ist ein ringförmiger Bereich in dem auch die Übergangsfläche zwischen der Glashülse und dem Lichtleitfaserende liegt. Dadurch werden beide in diesem Bereich angeschmolzen und dadurch miteinander verbunden.

## Patentansprüche

1. Verfahren zum Befestigen eines Lichtleitfaserendes aus Glas in einer Glashülse, wobei das Lichtleitfaserende (1) bis zu einer definierten Lage in die Glashülse (2) eingeschoben wird, die Endflächen (4, 5) von Lichtleitfaserende (1) und Glashülse (2) werden erhitzt und im Bereich der Übergangsfläche zwischen Glashülse (2) und Lichtleitfaserende (1) werden diese miteinander verschmolzen, **dadurch gekennzeichnet, dass** die maximale Energie zum Erhitzen der Endflächen (4, 5) im Bereich (6) der Übergangsfläche zwischen Glashülse (2) und Lichtleitfaserende (1) aufgebracht wird und dass die Erhitzung mittels eines Lasers (L) vorgenommen wird.

2. Verfahren nach Anspruch 1, **dadurch gekennzeichnet, dass** ein mechanisch oder mittels eines Lasers geschnittenes Lichtleitfaserende (1) eingesetzt wird.

3. Verfahren nach Anspruch 1, **dadurch gekennzeichnet, dass** eine Optik oder ein Hologramm eingesetzt wird, um die maximale Intensität des Laserstrahls auf einen Ring zu verteilen.

4. Verfahren nach Anspruch 1, **dadurch gekennzeichnet, dass** der Laserstrahl über die Endflächen (4, 5) bewegt wird, wobei in Summe die maximale Intensität ringförmig im äusseren Bereich des Mantels des Lichtleitfaserendes (1) und im inneren Bereich der Glashülse (2) aufgebracht wird.

5. Verfahren nach einem der Ansprüche 1 bis 4, **dadurch gekennzeichnet, dass** sich an den Schritt des Verschmelzens ein Polierschritt mittels eines Lasers anschliesst.

6. Verfahren nach einem der Ansprüche 1 bis 5, **dadurch gekennzeichnet, dass** die Endflächen (4, 5) von Lichtleitfaserende (1) und Glashülse (2) vor dem Verschmelzen in einer Ebene liegen.

7. Verfahren nach einem der Ansprüche 1 bis 5, **dadurch gekennzeichnet, dass** die Endflächen (4, 5) von Lichtleitfaserende (1) und Glashülse (2) vor dem Verschmelzen zueinander versetzt angeordnet werden.

## Claims

1. Method for fastening an end of an optic glass fibre in a glass sheath, wherein the end (1) of the optic fibre is inserted into the glass sheath (2) up to a defined position, the end faces (4, 5) of the end (1) of the optic fibre and glass sheath (2) are heated and fused together in the region of the transition face between the glass sheath (2) and the end (1) of the optic fibre, **characterised in that** the maximum energy for heating the end faces (4, 5) is applied in the region (6) of the transition face between the glass sheath (2) and the end (1) of the optic fibre and **in that** heating is carried out by means of a laser (L).

2. Method according to claim 1, **characterised in that** an end (1) of an optic fibre which is cut mechanically or by means of a laser is used.

3. Method according to claim 1, **characterised in that** a lens system or a hologram is used to distribute the maximum intensity of the laser beam onto a ring.

4. Method according to claim 1, **characterised in that** the laser beam is moved over the end faces (4, 5), the maximum intensity being applied in total annularly in the outer region of the casing of the end (1) of the optic fibre and in the inner region of the glass sheath (2).

5. Method according to any one of claims 1 to 4, **characterised in that** a polishing step by means of a laser follows the fusing step.

6. Method according to any one of claims 1 to 5, **characterised in that** the end faces (4, 5) of the end (1) of the optic fibre and the glass sheath (2) are located in one plane prior to fusing.

7. Method according to any one of claims 1 to 5, **characterised in that** the end faces (4, 5) of the end (1) of the optic fibre and the glass sheath (2) are arranged offset from one another prior to fusing.

## Revendications

1. Procédé de fixation d'une extrémité d'une fibre optique en verre dans un manchon en verre, dans lequel l'extrémité de la fibre optique (1) est insérée dans une position définie dans le manchon en verre (2), les surfaces d'extrémité (4, 5) de l'extrémité de la fibre optique (1) et du manchon en verre (2) étant chauffées et assemblées par fusion dans la région de la surface de transition entre le manchon en verre (2) et l'extrémité de la fibre optique (1), **caractérisé en ce que** l'énergie maximale de l'échauffement des surfaces d'extrémité (4, 5) est établie dans la région (6) de la surface de transition entre le manchon en verre (2) et l'extrémité de la fibre optique (1), l'échauffement étant réalisé par l'intermédiaire d'un laser (L).

2. Procédé selon la revendication 1, **caractérisé en ce qu'**il utilise une extrémité de fibre optique (1) découpée de manière mécanique ou par l'intermédiaire d'un laser.

3. Procédé selon la revendication 1, **caractérisé en ce qu'**il utilise un élément optique ou un hologramme pour répartir l'intensité maximale du rayon laser sur une région annulaire.

4. Procédé selon la revendication 1, **caractérisé en ce que** le rayon laser est déplacé sur les surfaces d'extrémité (4, 5), l'intensité maximale totale étant établie de manière annulaire dans la région externe de la gaine de l'extrémité de la fibre optique (1) et dans la région interne du manchon en verre (2).

5. Procédé selon l'une des revendications 1 à 4, **caractérisé en ce que** l'étape de l'assemblage par fusion est suivie par une étape de polissage par l'intermédiaire d'un laser.

6. Procédé selon l'une des revendications 1 à 5, **caractérisé en ce que** les surfaces d'extrémité (4, 5) de l'extrémité de la fibre optique (1) et du manchon en verre (2) se situent dans un plan avant l'assemblage par fusion.

7. Procédé selon l'une des revendications 1 à 5, **caractérisé en ce que** les surfaces d'extrémité (4, 5) de l'extrémité de la fibre optique (1) et du manchon en verre (2) sont décalées avant l'assemblage par fusion.
